# EUROPÄISCHE PATENTSCHRIFT

(11) **EP 3 524 838 B1**
(45) Veröffentlichungstag und Bekanntmachung des Hinweises auf die Patenterteilung: **28.04.2021**
(21) Anmeldenummer: 19155599.4
(22) Anmeldetag: 05.02.2019
(51) Int. Cl.: F16C 33/78

(54) **ABGEDICHTETES LAGERMODUL**
SEALED BEARING MODULE
MODULE DE PALIER ÉTANCHE

(30) Priorität: 07.02.2018 DE 102018201885
(43) Veröffentlichungstag der Anmeldung: 14.08.2019
(73) Patentinhaber: Aktiebolaget SKF, 415 50 Göteborg (SE)
(72) Erfinder: Baumann, Michael, 97503 Gädheim (DE); Hofmann, Matthias, 97422 Schweinfurt (DE)
(74) Vertreter: Kuhstrebe, Jochen

(56) Entgegenhaltungen:
- EP-A1- 2 743 522
- EP-A1- 3 001 058
- DE-A1-102011 016 185
- DE-A1-102014 205 637
- DE-U1-202012 011 902

## Beschreibung

Vorliegende Erfindung betrifft ein abgedichtetes Lagermodul für eine Gezeitenanlage gemäß dem Oberbegriff von Patentanspruch 1 Ein derartiges abgedichtetes Lagermodul ist aus der DE 10 2011 016 185 A1 bekannt.

Bisherige Lageranordnungen werden als Einzelteile geliefert und vor Ort in die Gezeitenanlage eingebaut und zusammengesetzt. Dabei werden die einzelnen Elemente üblicherweise erst vor Ort abgedichtet. Da Gezeitenanlagen unter Wasser eingesetzt werden, ist die Dichtheit der Lager besonders wichtig, da hier sehr leicht Feuchtigkeit eintreten und das Lager auf Dauer schädigen kann. Nach dem Einbau der Lageranordnung in die Gezeitenanlage muss daher die Dichtheit des Lagers überprüft werden. Dies ist mit hohem Aufwand verbunden, da die Überprüfung an der Gezeitenanlage erfolgt und nicht bei der Herstellung des Lagers.

Es ist deshalb Aufgabe vorliegender Erfindung, eine Lageranordnung bereitzustellen, bei der die Überprüfung auf Dichtheit vereinfacht werden kann.

Diese Aufgabe wird durch ein abgedichtetes Lagermodul gemäß Patentanspruch 1 gelöst. Das abgedichtete Lagermodul kann zwischen einer Nabe und einem Rotorblatt einer Gezeitenanlage angeordnet werden. Hierzu weist das Lagermodul einen Innenring und einen Außenring auf. Des Weiteren weist das Lagermodul ein Dichtungssystem zum Abdichten des Lagermoduls auf.

Bisherige Lageranordnungen werden in Einzelteilen geliefert und vor Ort in der Gezeitenanlage montiert. Insbesondere werden dabei die Lagerringe einzeln an der Nabe und dem Rotorblatt befestigt. Anschließend wird das gesamte Lager nach außen abgedichtet und nach dem Einbau auf Dichtheit getestet.

Um dies zu vermeiden, wird das vorgeschlagene Lagermodul als Gesamtsystem bereitgestellt und kann in bereits zusammengesetztem Zustand, einschließlich einem Dichtungssystem, in der Gezeitenanlage montiert werden. Hierzu weist das Lagermodul in dem Außenring sich axial erstreckende Bohrungen zum Befestigen des Außenrings direkt an der Nabe auf. Die Befestigung erfolgt dabei bevorzugt von der Nabenseite aus. Der Innenring weist ebenfalls sich axial erstreckende Bohrungen zum Befestigen des Innenrings an dem Rotorblatt auf.

Die Bohrungen des Innenrings und die Bohrungen des Außenrings können umfänglich um den Innenring und den Außenring verteilt sein. Bevorzugt sind die Bohrungen gleichmäßig verteilt.

Das Lagermodul kann dabei unter anderem durch die Befestigung von der Nabenseite aus als Ganzes in die Gezeitenanlage eingesetzt und in dieser montiert werden kann. Auf diese Weise wird eine Plug-and-Play-Lösung bereitgestellt, die einfach in die Gezeitenanlage integriert werden kann. Dies reduziert mögliche Fehler beim Einbau. Des Weiteren können die nötigen Tests, wie beispielsweise auf Dichtheit, bereits bei der Herstellung erfolgen.

Das Dichtungssystem dient dazu, das Lager zum einen gegen Seewasser abzudichten und zum anderen Schmiermittel in dem Lager zu halten. Das Dichtungssystem ist daher zwischen dem Außenring/Innenring und dem Rotorblatt angeordnet, da von der Seite des Rotorblatts Seewasser eindringen kann.

Das Lager kann ein Rollenlager sein. Als Rollenlager können beispielsweise einreihige- oder zweireihige Vierpunktlager, Kreuzrollenlager, Kegelrollenlager oder Dreiringlager eingesetzt werden. Die Rollen bzw. Kugeln des Lagers können durch einen fensterartigen Käfig voneinander getrennt sein. Gemäß einer Ausführungsform ist der Außenring daher ein geteilter Außenring.

Der Innenring kann direkt an dem Rotorblatt befestigt werden. Alternativ kann der Innenring über einen Distanzring an dem Rotorblatt befestigt werden. Wird der Innenring direkt an dem Rotorblatt befestigt, ist der Innenring in seiner axialen Ausdehnung größer als der Außenring, um die Verbindung mit dem Rotorblatt zu ermöglichen. Dies kann durch Verwendung eines Distanzrings vermieden werden, der eine axiale Verlängerung des Innenrings in Richtung des Rotorblatts ermöglicht. Der Distanzring und der Innenring können beispielsweise über eine Schraubverbindung miteinander verbunden werden.

Um einen einfachen Austausch des Dichtungssystems zu ermöglichen, ist dieses direkt an dem Außenring und Innenring abnehmbar angeordnet. Auf diese Weise kann auch nach der Montage des Lagermoduls in der Gezeitenanlage das Dichtungssystem bei Bedarf abgenommen und ausgetauscht werden. Bevorzugt ist das Dichtungssystem dabei auf einer Seite des Außenrings gegenüberliegend zu der Nabe angeordnet.

Das Dichtungssystem weist eine Anlauffläche aufweisen, die den Innenring oder den Distanzring radial umgibt. Die Anlauffläche kann aus Edelstahl, insbesondere Chromstahl, hergestellt sein. Um den Innenring abzudichten, kann zwischen der Anlauffläche und dem Innenring oder dem Distanzring eine Abdichtung vorgesehen sein. Diese Abdichtung kann beispielsweise durch O-Ringe realisiert werden, die zwischen der Anlauffläche und dem Innenring oder Distanzring angeordnet sind.

Das "Dichtungssystem weist eine Mehrzahl von Dichteinheiten auf. Jede Dichteinheit besteht dabei aus einem Dichtungsträgerring und einer Dichtlippe. Die Dichtlippen stoßen dabei an die Anlauffläche an und sind jeweils in einem Dichtungsträgerring angeordnet. Die einzelnen Dichtungsträgerringe sind in axialer Richtung zu der Anlauffläche nebeneinander angeordnet. Dabei können immer zwei Dichtungsträgerringe mit Befestigungsmitteln, beispielsweise mit einer Schraubverbindung, aneinander befestigt werden. Die Befestigungsmittel können dabei in axialer Ausrichtung umlaufend zueinander versetzt sein.

Die Dichtlippen können aus einem Gummi- oder Polyurethanmaterial hergestellt sein. Bevorzugt weist das verwendete Material eine Eigenschmierung auf und ist für eine Anwendung in Seewasser geeignet. Bei Dichtlippen aus einem Polyurethanmaterial (Plastik) erfolgt die Eigenschmierung durch Festschmierstoffe (Kohlenstoff), die im Kunststoff im Herstellprozess eingebettet sind.

Die Dichtungsträgerringe können aus Edelstahl oder Gusseisen , beispielsweise Grauguss, bestehen. Zusätzlich kann die Oberfläche der Dichtungsträgerringe mit einer Korrosionsschutzschicht geschützt werden. Die Korrosionsschutzschicht kann beispielsweise Zink aufweisen und als Lack oder als feuerverzinkte Schicht aufgebracht werden. Bei der Verwendung von Gusseisen kann eine Opferanode verwendet werden, um eine Korrosion des Gusseisens zu vermeiden oder zumindest zu verzögern.

Das Dichtungssystem kann zu dem Außenring hin eine Dichteinheit aufweisen, die direkt an dem Außenring angeordnet ist. Im Vergleich zu den übrigen Dichteinheiten kann diese Dichteinheit in radialer Richtung größer ausgestaltet sein und in ihren Ausmaßen dem Außenring entsprechen.

Zu der axial gegenüberliegenden Seite des Dichtungssystems weist das Dichtungssystem gemäß einer Ausführungsform eine Dichteinheit auf, die als Dichtungsabdeckung wirkt. Die Dichtungsabdeckung schließt das Dichtungssystem gegenüber dem Rotorblatt ab. Die übrigen Dichteinheiten sind zwischen der Dichtungsabdeckung und der Dichteinheit am Außenring angeordnet.

Die Abweichung im Rundlauf zwischen dem Wälzlager und dem Dichtungssystem wird weitestgehend reduziert. Der Rundlauf wird optimiert indem die Drehachsen der Dichtlippen und der Dichtungslauffläche weitestgehend übereinstimmen. Dadurch wird eine ständige radiale Verformung aller Dichtlippen während der Schwenk- oder Drehbewegung vermieden und der Verschleiß der Dichtlippen reduziert.

Die Dichtungsabdeckung kann ebenfalls aus Edelstahl oder Gusseisen bestehen. Zusätzlich kann die Oberfläche der Dichtungsabdeckung mit einer Korrosionsschutzschicht, beispielsweise einer Zinkschicht, geschützt werden.

Durch diese Anordnung, bei der die Dichteinheiten axial nebeneinander angeordnet sind, können auf einfache Weise die Dichteinheiten ausgetauscht werden. Hierzu muss lediglich die Dichtungsabdeckung abgenommen werden und anschließend kann die erste Dichteinheit ausgetauscht werden. Ist mehr als eine Dichteinheit auszutauschen, können die erste Dichteinheit und weitere, auf die erste Dichteinheit folgende Dichteinheiten ausgetauscht werden.

Wenn die Dichtungsträgerringe bzw. die Dichtlippen unterschiedliche Breiten aufweisen, können bei einem Austausch von mehreren Dichteinheiten diese in anderer Reihenfolge wieder eingebaut werden, so dass sich die Dichtungsträgerringe bzw. Dichtlippen nach dem Wiedereinbau an unterschiedlichen Laufspuren befinden als zuvor. Auf diese Weise kann die Abnutzung der Anlauffläche gleichmäßiger verteilt werden. Eine Abnutzung der Anlauffläche kann aufgrund des Drucks der Dichtlippen gegen die Anlauffläche auftreten.

Gemäß einer bevorzugten Ausführungsform sind fünf Dichteinheiten vorgesehen. Die ersten vier Dichteinheiten dienen zum Abdichten des Lagers gegenüber eintretendem Seewasser. Zunächst dichtet dabei die erste, äußerste Dichteinheit, d.h. die Dichtungsabdeckung, ab. Wenn die erste Dichteinheit, bzw. deren Dichtlippe abgenutzt ist, d.h. wenn sie kein Seewasser mehr abhalten kann, dienen die zweite bis vierte Dichtlippe als folgende Abdichtung gegenüber eintretendem Seewasser. Auf diese Weise wird ein Dichtungssystem verwendet, welches zusätzlich zu einer Dichtlippe noch weitere Backup-Dichtlippen aufweist. Die innerste, fünfte Dichtlippe, d.h. die Dichtlippe, die am nächsten an dem Außenring angeordnet ist, dient dazu, ein Schmiermittel in dem Lager zu halten.

Weiterhin kann auf der dem Lager entgegengesetzten Seite des Lagers eine weiter Dichtung direkt oder indirekt zwischen dem Innenring und dem einen Außenring angeordnet sein, um das Schmiermittel auch auf dieser Seite im Lager zu halten, sodass bezüglich des Schmiermittels das Lager beidseitig abgedichtet ist.

Der Innenring kann direkt mit einer Verzahnung verbunden sein, in die ein Zahnrad eines Drehantriebes eingreifen kann. Auf diese Weise wird nicht nur ein einfach einzubauendes, bereits abgedichtetes Lagermodul geschaffen, sondern dies kann auch ohne weiteres mit dem Drehantrieb gekoppelt werden.

Gemäß einem weiteren Aspekt wird eine Gezeitenanlage mit einer Nabe und zumindest einem Rotorblatt vorgeschlagen, zwischen denen ein wie oben beschriebenes abgedichtetes Lagermodul angeordnet ist.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigt:

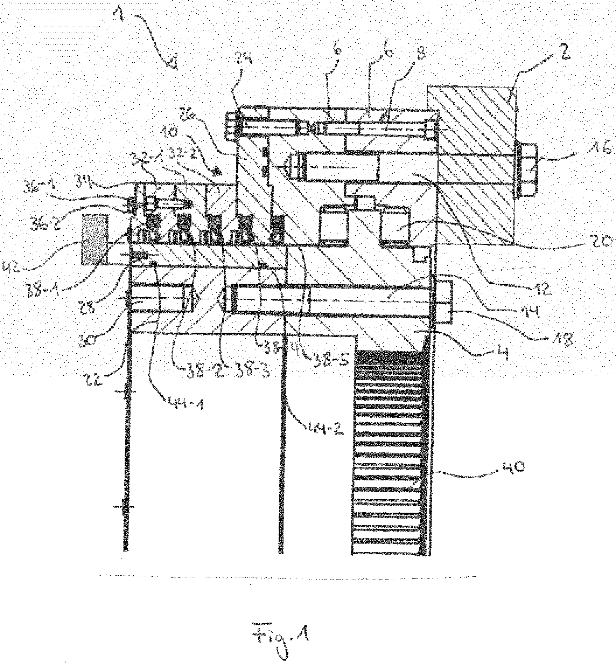

- Fig. 1:: eine Schnittansicht eines abgedichteten Lagermoduls für eine Gezeitenanlage.

Im Folgenden werden gleiche oder funktionell gleichwirkende Elemente mit denselben Bezugszeichen gekennzeichnet.

Fig. 1 zeigt ein abgedichtetes Lagermodul 1. Das Lagermodul 1 ist zwischen einer Nabe 2 und einem Rotorblatt (nicht gezeigt) einer Gezeitenanlage angeordnet, um das Rotorblatt drehbar zur Nabe 2 zu lagern. Das Lagermodul 1 kann in einem Gehäuse (nicht gezeigt) angeordnet sein. Wird das Rotorblatt durch das Seewasser, insbesondere aufgrund der Gezeiten, bewegt, kann über die Nabe 2 ein Generator angetrieben werden, um Strom zu erzeugen. Über eine Verzahnung 40, kann das Rotorblatt in seinem Anstellwinkel verstellt werden (Pitch-Verstellung).

Das Lagermodul 1 weist einen Innenring 4 und einen Außenring 6 auf. In der gezeigten Ausführungsform handelt es sich um ein dreireihiges Rollenlager, weshalb der Außenring 6 zweigeteilt ist. Die beiden Teile des Außenrings 6 sind mittels eines Befestigungsmittels 8 miteinander verbunden. Zwischen dem Innenring 4 und dem Außenring 6 sind Wälzkörper 20 angeordnet.

Das Lagermodul 1 weist Bohrungen 12 in dem Außenring 6 und Bohrungen 14 in dem Innenring 4 auf, um das Lagermodul 1 direkt mit der Nabe 2 bzw. dem Rotorblatt zu verbinden. Dabei wird der Außenring 6 mittels eines Befestigungsmittels 16 direkt an der Nabe befestigt.

In der gezeigten Ausführungsform wird der Innenring 4 nicht direkt an dem Rotorblatt befestigt, sondern über einen Distanzring 22. Der Distanzring 22 ist dabei über ein Befestigungsmittel 18 mit dem Innenring 4 verbunden. Anschließend wird der Distanzring 22 von der Rotorblattseite mit einem Befestigungsmittel 30 mit dem Rotorblatt verbunden. Die Innenringanordnung ist hier also zweiteilig ausgestaltete und besteht aus dem Distanzring 22, welcher Bohrungen zur Rotorblattseite und zum Innenring hin aufweist und dem Innenring 4, welcher durchgehende Bohrungen zur Befestigung des Distanzrings aufweist. Alternativ kann der Innenring 4 in axialer Richtung länger ausgestaltet sein und direkt mit dem Rotorblatt verbunden werden. Die Befestigung des Innenrings 4 mit dem Rotorblatt erfolgt dabei ebenfalls von der Rotorblattseite.

Da die Befestigung durch die Bohrungen 12 in dem Außenring 6 von der Nabenseite erfolgen kann und nicht von der Seite des Außenrings 6, kann das Lagermodul 1 bereits vor dem Einbau vollständig zusammengebaut sein. Insbesondere kann ein Dichtungssystem 10 bereits installiert sein.

Zusätzlich ist der Innenring 4 direkt mit einer Verzahnung 40 versehen. Durch diese Verzahnung 40 kann eine einfache Verbindung mit der Verzahnung eines Antriebs erfolgen. Durch die Verbindung zwischen Rotorblatt, Innenring 4 (über den Distanzring 22 und die Verzahnung 40) kann die Stellung des Rotorblatts zur Nabe verstellt werden um auf Strömungsgeschwindigkeiten, Strömungsstärke oder Strömungsrichtung reagieren zu können und einen optimalen Anströmwinkel einstellen zu können.

Um das Lagermodul 1 abzudichten, weist das Lagermodul 1 das Dichtungssystem 10 auf. Das Dichtungssystem 10 weist eine Mehrzahl von Dichteinheiten auf. Jede der Dichteinheiten weist einen Dichtungsträgerring 26, 34, 32 und ein in diesem angeordnetes Dichtelement mit einer Dichtlippe 38 auf. Eine der Dichteinheiten ist mit ihrem Dichtungsträgerring 26 direkt mit dem Außenring 6 verbunden. Hierzu wird von der Seite der Dichteinheit ein Befestigungsmittel 24, beispielsweise eine Schraube, durch den Dichtungsträgerring 26 in den Außenring 6 eingeschraubt. Diese Dichteinheit dient somit der Befestigung des Dichtungssystems 10 an dem Außenring. Hierzu ist der entsprechende Dichtungsträger 26 in seinen axialen Abmessungen den axialen Abmessungen des Außenrings 6 angepasst. Auf diese Weise kann das gesamte Dichtungssystem 10 bei Bedarf einfach von dem Außenring 6 demontiert und ausgetauscht werden.

Zur Abdichtung nach außen dient eine weitere Dichteinheit. Der Dichtungsträgerring 34 dieser Dichteinheit stellt eine Art Dichtungsabdeckung dar. Zwischen dieser und der Dichteinheit 26 sind mehrere Dichteinheiten mit ihren Dichtungsträgerringen 32 angeordnet. Jeder dieser Dichtungsträgerringe 32 weist ein Dichtelement mit einer Dichtlippe 38 auf. Die Dichtungsträgerringe 32 sind über Befestigungsmittel 36 miteinander verbunden. Dabei sind immer zwei Dichtungsträgerringe 26, 32, 38 miteinander verbunden. Die Befestigungsmittel 36 sind dabei in axialer Richtung umlaufend zueinander versetzt.

Im Betrieb laufen die Dichtlippen 38 gegen eine Anlauffläche 28 an. Eine Abdichtung der Anlauffläche 28 zu dem Distanzring 22 erfolgt dabei über O-Ringe 44.

Ist eine der Dichtlippen 38 abgenutzt, kann diese auf einfache Weise ausgetauscht werden. Hierzu wird zunächst die Dichtungsabdeckung 34 abgenommen. Danach kann die anschließende Dichteinheit mit ihrem Dichtungsträgerring 32 und der Dichtlippe 38 entfernt und als Einheit ausgetauscht werden.

Die ersten vier Dichtlippen 38-1 bis 38-4 dienen als Reihenschaltung dazu, Seewasser aus dem Lager abzuhalten. Die erste Dichtlippe 38-1 muss dabei den höchsten Druck aushalten und wird daher zuerst abgenutzt. Hält die erste Dichtlippe 38-1 dem Druck des Seewassers nicht mehr stand, übernimmt die zweite, auf die erste folgende, Dichtlippe 38-2 diese Funktion. Die erste Dichtlippe 38-1 fungiert dabei weiterhin als Filter für größere Verunreinigungen. Als weitere Ersatzdichtlippen sind eine dritte und eine vierte Dichtlippe 38-3, 38-4 vorgesehen. In dem Dichtungssystem 10 kann ein Sensor (nicht gezeigt), beispielsweise ein Feuchtigkeitssensor oder Drucksensor angeordnet sein, der ein Signal ausgeben kann, wenn Seewasser die dritte oder vierte Dichtlippe 38-3, 38-4 erreicht. Sobald ein solches Signal ausgegeben wird, kann ein Austausch der Dichtlippen 38 initiiert werden. Die fünfte Dichtlippe 38-5, die am nächsten an dem Außenring 6 angeordnet ist, dient dazu, Schmiermittel in dem Lager zu halten.

Zum weiteren Schutz des abgedichteten Lagermoduls 1 kann eine Opferanode 42 an der Anlauffläche 28 angeordnet sein. Die Opferanode 42, die eine Elektrode aus einem Stück unedlem Metall ist, dient dazu, das Lagermodul 1 gegen Kontaktkorrosion zu schützen. Das Material der Opferanode 42 selbst wird dabei durch Oxidation zerstört, während eine Korrosion der Bauteile des Lagermoduls 1 hinausgeschoben oder ganz vermieden wird.

Zusammenfassend wird durch das vorgeschlagene abgedichtete Lagermodul eine kompakte Lagerbaugruppe bereitgestellt. Diese kann bereits vor dem Einbau an ihrem Bestimmungsort erforderliche Tests, wie beispielsweise auf Dichtheit, durchlaufen. Aufwendige Tests sind nach dem Einbau daher nicht mehr erforderlich.

### Bezugszeichenliste

- 1: Lagermodul
- 2: Nabe
- 4: Innenring
- 6: Außenring
- 8: Befestigungsmittel
- 10: Dichtungssystem
- 12: Bohrung
- 14: Bohrung
- 16: Befestigungsmittel
- 18: Befestigungsmittel
- 20: Wälzkörper
- 22: Distanzring
- 24: Befestigungsmittel
- 26: Dichtungsträgerring
- 28: Anlauffläche
- 30: Befestigungsmittel
- 32: Dichtungsträgerringe
- 34: Dichtungsabdeckung
- 36: Befestigungsmittel
- 38: Dichtlippen
- 40: Verzahnung
- 42: Opferanode
- 44: O-Ringe

## Patentansprüche

1. Abgedichtetes Lagermodul (1) für eine Gezeitenanlage mit einer Nabe (2) und zumindest einem Rotorblatt, welches einen Innenring (4) und einen Außenring (6) sowie ein Dichtungssystem (10) zum Abdichten des Lagermoduls (1) aufweist, wobei der Außenring (6) sich axial erstreckende Bohrungen (12) zum Befestigen des Außenrings (6) direkt an der Nabe (2) aufweist, und der Innenring (4) sich axial erstreckende Bohrungen (14) zum Befestigen des Innenrings (4) an dem Rotorblatt aufweist, wobei der Innenring (4) direkt oder indirekt über einen Distanzring (22) an dem Rotorblatt befestigbar ist, wobei das Dichtungssystem (10) eine Anlauffläche (28) aufweist, die den Innenring (4) oder den Distanzring (22) radial umgibt, wobei das Dichtungssystem (10) eine Mehrzahl von Dichteinheiten aufweist,
**dadurch gekennzeichnet, dass** jede Dichteinheit ein Dichtelement mit einer Dichtlippe (38) aufweist, die mit der Anlauffläche (28) in Kontakt steht und die jeweils in einem Dichtungsträgerring (32) angeordnet ist.

2. Abgedichtetes Lagermodul (1) nach Anspruch 1, wobei der Außenring (6) ein geteilter Außenring ist.

3. Abgedichtetes Lagermodul (1) nach einem der vorhergehenden Ansprüche, wobei das Dichtungssystem (10) direkt an dem Außenring (6) und Innenring (4) abnehmbar angeordnet ist.

4. Abgedichtetes Lagermodul (1) nach einem der vorhergehenden Ansprüche, wobei eine der Dichteinheiten direkt an dem Außenring (6) angeordnet ist, wobei das Dichtsystem (10) eine Dichtungsabdeckung (34) aufweist, und wobei die übrigen Dichteinheiten zwischen der Dichteinheit am Außenring (6) und der Dichtungsabdeckung (34) angeordnet sind.

5. Abgedichtetes Lagermodul (1) nach Anspruch 4, wobei die Dichteinheiten von der Seite der Dichtungsabdeckung (34) austauschbar sind.

6. Abgedichtetes Lagermodul (1) nach einem der vorhergehenden Ansprüche, wobei der Innenring (4) eine Verzahnung (40) aufweist.

7. Gezeitenanlage mit einer Nabe (2) und zumindest einem Rotorblatt, zwischen denen ein abgedichtetes Lagermodul (1) gemäß einem der vorhergehenden Ansprüche angeordnet ist.

## Claims

1. Sealed bearing module (1) for a tidal installation having a hub (2) and at least one rotor blade, which has an inner ring (4) and an outer ring (6) and also a seal system (10) for sealing the bearing module (1), wherein the outer ring (6) has axially extending bores (12) for fastening the outer ring (6) directly to the hub (2), and the inner ring (4) has axially extending bores (14) for fastening the inner ring (4) to the rotor blade, wherein the inner ring (4) can be directly or indirectly fastened to the rotor blade via a spacer ring (22), wherein the seal system (10) has a run-on surface (28) which radially surrounds the inner ring (4) or the spacer ring (22), wherein the seal system (10) has a plurality of sealing units, **characterized in that** each sealing unit has a sealing element with a sealing lip (38) which is in contact with the run-on surface (28) and which is in each case arranged in a seal carrier ring (32).

2. Sealed bearing module (1) according to Claim 1, wherein the outer ring (6) is a split outer ring.

3. Sealed bearing module (1) according to either of the preceding claims, wherein the seal system (10) is removably arranged directly on the outer ring (6) and inner ring (4).

4. Sealed bearing module (1) according to one of the preceding claims, wherein one of the sealing units is arranged directly on the outer ring (6), wherein the sealing system (10) has a seal cover (34), and wherein the remaining sealing units are arranged between the sealing unit on the outer ring (6) and the seal cover (34) .

5. Sealed bearing module (1) according to Claim 4, wherein the sealing units can be exchanged from the side of the seal cover (34).

6. Sealed bearing module (1) according to one of the preceding claims, wherein the inner ring (4) has a toothing (40).

7. Tidal installation having a hub (2) and at least one rotor blade between which a sealed bearing module (1) according to one of the preceding claims is arranged.

## Revendications

1. Module de palier étanche (1) pour une installation marémotrice comprenant un moyeu (2) et au moins une pale de rotor, qui présente une bague intérieure (4) et une bague extérieure (6) ainsi qu'un système de joint d'étanchéité (10) pour étanchéifier le module de palier (1), la bague extérieure (6) présentant des alésages (12) s'étendant axialement pour la fixation de la bague extérieure (6) directement au moyeu (2), et la bague intérieure (4) présentant des alésages (14) s'étendant axialement pour la fixation de la bague intérieure (4) à la pale de rotor, la bague intérieure (4) pouvant être fixée à la pale de rotor directement ou indirectement par le biais d'une bague d'espacement (22),
le système de joint d'étanchéité (10) présentant une surface de guidage (28) qui entoure radialement la bague intérieure (4) ou la bague d'espacement (22), le système de joint d'étanchéité (10) présentant une pluralité d'unités d'étanchéité,
**caractérisé en ce que** chaque unité d'étanchéité présente un élément d'étanchéité avec une lèvre d'étanchéité (38) qui est en contact avec la surface de guidage (28) et qui est à chaque fois disposée dans une bague de support de joint d'étanchéité (32).

2. Module de palier étanche (1) selon la revendication 1, dans lequel la bague extérieure (6) est une bague extérieure divisée.

3. Module de palier étanche (1) selon l'une quelconque des revendications précédentes, dans lequel le système de joint d'étanchéité (10) est disposé de manière amovible directement sur la bague extérieure (6) et la bague intérieure (4).

4. Module de palier étanche (1) selon l'une quelconque des revendications précédentes, dans lequel l'une des unités d'étanchéité est disposée directement contre la bague extérieure (6), le système de joint d'étanchéité (10) présentant un recouvrement de joint d'étanchéité (34) et les autres unités d'étanchéité étant disposées entre l'unité d'étanchéité au niveau de la bague extérieure (6) et le recouvrement de joint d'étanchéité (34).

5. Module de palier étanche (1) selon la revendication 4, dans lequel les unités d'étanchéité peuvent être remplacées du côté du recouvrement de joint d'étanchéité (34).

6. Module de palier étanche (1) selon l'une quelconque des revendications précédentes, dans laquelle la bague intérieure (4) présente une denture (40) .

7. Installation marémotrice comprenant un moyeu (2) et au moins une pale de rotor entre lesquels est disposé un module de palier étanche (1) selon l'une quelconque des revendications précédentes.
